# EUROPEAN PATENT APPLICATION

(11) **EP 0 541 128 A1**
(43) Date of publication of application: **12.05.1993**
(21) Application number: 92119147.4
(22) Date of filing: 09.11.1992
(51) Int. Cl.: G02F 1/23, G02F 1/1335, G02F 1/1347

(54) **Color display device**

(30) Priority: 07.11.1991 JP 291213/91
(71) Applicant: HITACHI, LTD., Chiyoda-ku, Tokyo 101 (JP)
(72) Inventor: Isogai, Masato, Mito-shi, Ibaraki-ken (JP); Abe, Hidetoshi, Katsuta-shi, Ibaraki-ken (JP); Kitamura, Teruo, Katsuta-shi, Ibaraki-ken (JP); Ohe, Masahito, Hitachi-shi, Ibaraki-ken (JP)
(74) Representative: Patentanwälte Beetz - Timpe - Siegfried Schmitt-Fumian - Mayr

(57) **Abstract**

A color display comprising a white light source, a first color polarizer (3A), an active matrix liquid crystal cell (1), a second color polarizer (3B), the second liquid crystal cell (2A), a third color polarizer (3C), and the third liquid crystal cell (2B), wherein the active matrix liquid crystal cell (1) functions as an image forming element, wherein the second and the first liquid crystal cells (2A, 2B) have a function as an optical switch to selectively transmit the three primary colors of light depending on a particular combination of on and off thereof, and wherein by driving the above two cells (2A, 2B) in synchronization with each other, images corresponding to the primary colors of light are displayed sequentially so as to realize a full color display.

## Description

### [Field of the Invention]

The present invention relates to a color display device utilizing liquid crystal, in particular, it relates to liquid crystal displays for use, for example in business equipment in office or TVs.

### [Prior Art]

Liquid crystal displays are now widely used in many fields of applications, for example, as business machines in office such as personal computers, word processors, as portable business machines such as calculators, electronic notebooks, or as portable TVs and the like. The demands in the market, however, are toward larger information capacity, higher resolution, and for multi color displays, thereby advanced display methods and their equipment are greatly desired to be developed.

Main liquid crystal displays now in a wide use include a combination of a TN mode display (Twisted Nematic) and a drive method for driving liquid crystals by active-matrix addressing with TFTs (Thin Film Transistors) or MIM (Metal-Insulator-Metal) elements formed into a matrix as a drive circuit, and a combination of an STN display mode (Super Twisted Nematic; see Japanese Patent Laid-Open No.60-107020) and a drive method by the simple matrix addressing (see Flat Panel Displays '90, Nikkei BP, 1990).

The above first type TN mode assumes as its initial state of orientation a twisted structure of liquid crystals with a twisted molecule arrangement by approximately 90° within its display cell. The light that incidents the liquid crystal changes its polarization state due to this twisted structure and the birefringence of the liquid crystal, and so is emitted therefrom. When an electrical field is applied across the liquid crystal layer, the liquid crystals are rearranged in the direction of the electrical field, thereby untwisting the twisted structure. At this time, an incident light is permitted to pass therethrough without being changed of its polarization state and to be emitted therefrom. A sandwich arrangement interposing the above liquid crystals between two polarizers cause that a difference in the polarization states of light emitted transforms a difference in the intensity of light transmitted therethrough, thereby producing contrast between bright and dark. According to this type of display mode, since the light transmission intensity versus applied voltage characteristics (I-V characteristic) are not steep enough, there is imposed a limit to the number of display lines attainable by the so-called simple matrix addressing method which uses electrodes combined in stripes. Thereby, by forming a drive element such as transistors, diodes, MIM elements or the like on each picture element or pixel, a larger display capacity, higher resolution display will be realized. For implementing multicolor displays, color filters for the three primary colors are arranged in a matrix on each picture element. This, in principle, can attain a high quality of display superior to that of a CRT (Cathode Ray Tube).

In this type of liquid crystal displays, with the progress of related technologies for greater capacity and higher resolution, the number of the above drive elements to be mounted as well as the resolution capability will increase. In addition, each picture element must be provided with elements associated with the primary colors to be formed thereon. It is the same with color filters. Even if advancement in the drive element fabrication techniques or color filter fabrication techniques can keep in step with the above-mentioned trends and should be able to comply with the demands in the markets and technologies, increased cost in fabrication cannot be avoided. Furthermore, it requires more challenging efforts in the technical field.

In another type of the display modes, i.e., STN mode, the cell thereof has a twisted structure extremely greater than that of the TN type. That is, it has a twist angle of from 240° to -260° which is approximately three times greater than that of by the TN type, as a result, its I-V characteristic becomes steeper so as to enable for the simple matrix drive method to realize a hundred lines or more for display. At present, an experimental model with about eight hundred lines for display is being developed, which, however, is almost near to the limit in terms of performance, and will not be able to meet the demands for further improvements in resolution. Further, although gray scale is required in principle to implement a multi color display, it is difficult for this type of display to meet such requirement.

Japanese Patent Laid-Open No.60-100120 (1985) discloses an electro-optical device comprising a pair of variable optical retarders sandwiched between a pair of polarizing filters, which enables a high speed switching of the device between two states of optical transmission.

U.S. Patent No.4,583,825 (1986) discloses an optical switching system which is almost same as Japanese Patent Laid-Open No.60-100120.

Japanese Patent Laid-Open No.63-170614 (1988) discloses a liquid crystal projector which comprises a light source, a light modutor for emitting a polarized light, means for enlarging a picture image, a plurality of twisted nematic liquid crystal cells each having a different color characteristic, and a plurality of guest-host liquid crystal cells, wherein the twisted nematic liquid crystal cells and guest-host liquid crystal cells are aligned in the same optical axis, whereby the projector displays color images by means of addition-color mixting method.

Japanese Patent Laid-Open No.2-67893 (1990) discloses a color display device comprising a monochrome CRT, means for applying image signals to the CRT, a matrix color liquid crystal shutter disposed in front of the CRT, and means for applying color signals constituting the image signals to the color liquid crystal shutter.

Japanese Patent Laid-Open No.2-28623 (1990) discloses a color filter for controlling transmittance of incident light so as to supply outputting color signals and a method for supplying outputting signals having determined color spectrum.

U.S. Patent No.4,770,500 (1988) and U.S. Patent No.4,867,536 (1989) disclose multi-color display device comprising liquid crystal cells, which are capable of displaying two colors and mixed colors thereof.

Information Display 1/91, pp.11-15 discloses a RGB liquid crystal shutter system.

### [Summary of the Invention]

The primary object of the invention is to provide a color liquid crystal display suitable for use in many types of displays including office automation equipment, and in particular such a color display that is capable of displaying high resolution images, and which is capable of being fabricated by extending the prior art method.

In order to accomplish the above object, in the first claim of the invention, it proposes a color display comprising a white light source, a first color polarizer, an active matrix-addressed liquid crystal cell, a second color polarizer, a second liquid crystal cell, a third color polarizer, and a third liquid crystal cell, disposed in the sequential order thereabove, wherein said first, second, and third color polarizers have a function to change, responding to a polarization direction of an incident light, the spectra of the light passing therethrough, wherein said active matrix elements in the active matrix liquid crystal cell generates a drive signal corresponding to information to be displayed, said second liquid crystal cell changes the state of polarization of light passing therethrough, and has a drive system for controlling an amount of said variation, said third liquid crystal cell switches the directions of polarization of the light transmitting therethrough and has a drive system for controlling said switching, and wherein said first, second and third liquid crystal cells are driven synchronizing one another so as to sequentially display images corresponding to the three primary colors of light.

The liquid crystal cell of the active matrix addressing hereinabove described is preferably, in terms of display quality, a liquid crystal cell comprising a thin film transistor and a transparent electrode both in combination constitute a unit component of a picture element or pixel. Said second liquid crystal element has a function to rotate the polarization direction of an incident light by π/2 when no electrical field is applied, and to cause it to be emitted receiving little change when an electrical field is applied. The liquid crystal cells suitable for use in the above active matrix type liquid crystals and said second liquid crystal include: (1) those interposing nematic liquid crystals having a twisted structure as its initial orientation state, (2) those comprising; interposing nematic liquid crystals having an untwisted structure as its initial orientation state; incorporating a phase shifter; and applying an electrical field such that the phase retardation of light passing through the cell changes approximately between π and zero, (3) those interposing a ferroelectric liquid crystal which causes the retardation of approximately π in light passing therethrough, and which has an optical molecular tilt angle of approximately π/8, and (4) those interposing a ferroelectric liquid crystal which contains a dichroic dye, and has a molecular tilt angle of approximately π/4. Further, liquid crystals suitable for use as the third liquid crystal include: (1) those interposing nematic liquid crystals which has a twisted structure as its initial orientation state, and disposing a polarizer at the light emission side, (2) those comprising interposing nematic liquid crystals which has an untwisted structure as its initial orientation state, a phase plate shifter, applying an electrical field such that the retardation in light passing through the cell changes approximately between π and zero, and disposing a polarizer at the light emission side, and (4) those interposing ferroelectric liquid crystal containing a dichroic dye, and a molecular tilt angle of the ferroelectric liquid crystal is approximately π/4. The first, the second and the third color polarizers mentioned above need not be of a monolayer structure, but may be a combination of a plurality of color polarizers each of which provides a different spectrum for light passing therethrough. A selection interval for one frame of picture is preferably less than 10 ms in consideration of the after image in human eyes, and flickering.

In another aspect of the present invention, a color display for sequentially displaying images corresponding to the three primary colors of light is proposed wherein the same comprises a white light source, an image forming element, and two optical switches, wherein said image forming element comprises electrooptical material whose optical property changes responding to an electrical field applied, and a means formed thereon for applying electrical signals corresponding to image information to be displayed to said electrooptical material, wherein said two optical switching elements have a function selectively to transmit the three primary colors of light according to a combination of ON and OFF states of respective switching elements, and which are driven in synchronization with the above image forming elements to sequentially display images corresponding to the three primary colors of light.

In this case, the above image forming element comprises forming an electrooptical material whose optical property changes responding to an electrical field applied and a means for applying electrical signals to the electrooptical material corresponding to image information to be displayed, and the above two optical switching elements comprises having a function to selectively transmit the three primary colors of light according to a combination of ON and OFF states of respective switching elements, being driven in synchronization with the above image forming element, and sequentially displaying images corresponding to the three primary colors of light.

In another aspect of the invention, a color display for sequentially displaying images corresponding to the three primary colors of light is proposed, wherein the same comprises sequentially disposing an active matrix liquid crystal cell, the first color polarizer, the second liquid crystal cell, the second color polarizer, and the third liquid crystal cell, wherein the first, the second, and the third color polarizers cause the spectra (hues) of light passing therethrough to change depending on the polarization directions at its incidence, wherein said active matrix liquid crystal cell is provided with a control system which generates a drive signal to be applied to the liquid crystal corresponding to image information to be displayed, wherein said second liquid crystal cell is provided with a drive system which causes the light having passed the above second color polarizer to change its polarization states, and controls the amount of changes in the polarization states, wherein the third liquid crystal cell is provided with a switching function to switch for the light passing therethrough between its polarization directions, and a drive system to control the switching operation, and wherein the above first, second, and third liquid crystals cells are driven in synchronization with each other to sequentially display images corresponding to the three primary colors of light.

In the above arrangement, it is intended to implement that the above active matrix liquid crystal cell generates image information to be displayed, the above second liquid crystal cell has a function to change the polarization states of light having passed through the above second color polarizer, the above third liquid crystal cell has a function to switch the directions of polarization of light passing therethrough and is further provided with a drive system for controlling the above switching operation, and images corresponding to the three primary colors of light are sequentially displayed. The first liquid crystal of the active matrix drive scheme is preferably chosen from the liquid crystals of (1) through (3) referred to in the above active matrix liquid crystal cells.

Further, in another aspect of the invention, a color display for sequentially displaying images corresponding to the three primary colors of light is proposed, wherein the same comprises sequentially disposing an active matrix liquid crystal cell, a first color polarizer, a second liquid crystal cell, a second color polarizer, and a third liquid crystal cell, wherein the above first, second, and third color polarizers change the spectra (hues) of light passing therethrough responding to the directions of polarization at its incidence, wherein the active matrix liquid crystal cell is provided with a control system which causes to generate a drive signal to be applied to the liquid crystal cell corresponding to image information to be displayed, wherein the above second liquid crystal is provided with a drive system which causes the light having passed through the above second color polarizer to change its polarization state, to be emitted as changed, and which controls the amount of such changes, wherein the above third liquid crystal cell has a switching function to switch for the light passing therethrough between its directions of polarization and is provided with a drive system for controlling the above switching operation, and wherein the above first, second, and third liquid crystal cells are driven in synchronization with each other to sequentially display images corresponding to the three primary colors of light.

In this case, the method of operation of the above first, second, and third liquid crystal cell is such that they are driven in synchronization with one another so as to sequentially display images corresponding to the three primary colors of light. Liquid crystals suitable for use as the first liquid crystal in the active-matrix method must have a function to change transmissivity of light under application of electrical fields, thereby it is preferable to utilize, for example, nematic liquid crystals which are dispersed in a polymer matrix.

Referring to the accompanying drawings, the principle of operation of the present invention will be described in the following.

### [Brief Description of the Drawings]

Fig.1 is a schematic diagram showing the first basic optical system of the invention.

Fig.2a and Fig.2b are schematic diagrams of transmission spectra for illustrating the principle of operation of the invention.

Fig.3a and Fig.3b are schematic diagrams showing arrangements in the liquid crystal element for use in the first embodiment of the invention.

Fig.4a and Fig.4b are schematic diagrams showing arrangements in the liquid crystal element for use in the second embodiment of the invention.

Fig.5a and Fig.5b are schematic diagrams showing arrangement in the liquid crystal element for use in the third embodiment of the invention.

Fig.6a and Fig.6b are schematic diagrams showing arrangement in the liquid crystal element for use in the fourth embodiment of the invention.

Fig.7a and Fig.7b are schematic diagrams showing arrangement in the liquid crystal element for use in the fifth embodiment of the invention.

Fig.8 is a schematic diagram illustrating the second basic optical system of the invention.

Fig.9 is a schematic diagram illustrating the third basic optical system of the invention.

### [Description of the Preferred Embodiments]

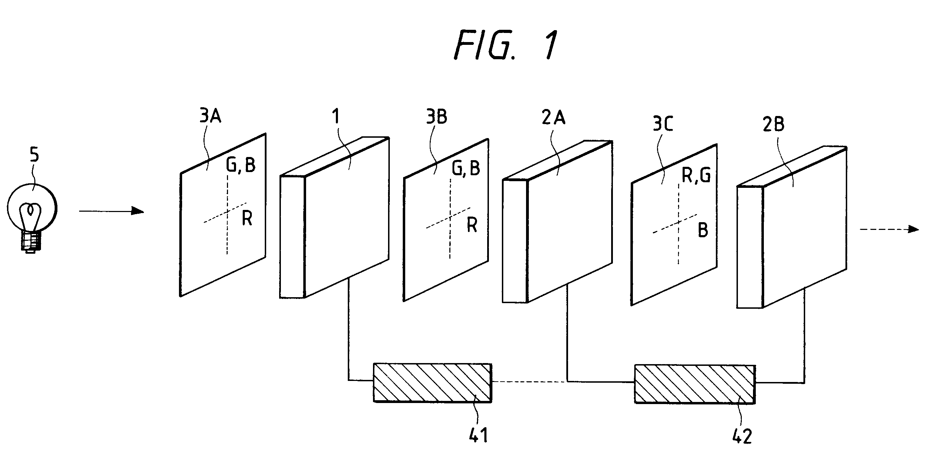

Fig.1 shows the first basic constitution of one embodiment of the invention. The light emitted from white light source 5 is filtered by color polarizer 3A such that only green G and blue B which are polarization components in the vertical direction and only red R which is a polarization component in the horizontal direction are permitted to pass therethrough. In image forming active matrix liquid crystal cell 1, each polarization component is modulated in response to an imaging signal sent from controller 41. When, for example, no electrical field is applied across the active-matrix liquid crystal cell 1, that is, at OFF-state, the direction of linear polarization is rotated 90° (π/2), and when a sufficient electrical field is applied, that is, at ON-state, each component is presumed to pass through without being changed of its polarization states. Suppose that second color polarizer 3B has the same function as the first color polarizer 3A and is disposed in the same direction (normally black). When the picture elements of the above active matrix-addressed liquid crystal element 1 are at OFF-state, the light cannot pass through the second color polarizer 3B as it is absorbed therein. On the other hand, when at ON-state, the light can pass therethrough, thus providing contrast between bright and dark. That is, images are displayed reflecting the intensity of light transmitted in response to an image signal from control unit 41. It is to be understood that the second color polarizer 3B may be disposed by rotating 90° (normally white). In this case, the relations among bright, dark states and ON, OFF-states are reversed.

Next, the second and the third liquid crystals 2A and 2B finally select the spectra (hues) of light permitted to pass through this optical system. That is, the second liquid crystal cell basically over the whole surface of which electrodes have been formed, determines whether to transmit the light without changing the direction of polarization or rotate it by 90° by selecting whether to apply electric fields or not (i.e., ON or OFF). The third liquid crystal cell 2B has a function to select the direction of polarization of light passing therethrough according to its ON or OFF-states. For example, at OFF-state, only the polarized components in the vertical direction are permitted to pass through, and at ON-state, only the polarized components in the horizontal direction are permitted to pass through. Further, third color polarizer 3C which has the same function, in principle, as the second and third color polarizers 3A and 3B, but imparts a combination of hues different from the above two to the light passing therethrough is disposed between the second and the third liquid crystal cells 2A and 2B. That is, only green G and red R, polarization components in the vertical direction are permitted to pass, while only blue B, polarization component in the horizontal direction is permitted to pass. At this time, combinations of ON and OFF-states for the second and the third liquid crystal elements 2A and 2B will impart different hues to light passing therethrough as shown in Table 1.

**Table 1**

| Second LC Element 2A | Third LC Element 2B | Hues of Light Transmitted |
|---|---|---|
| OFF | OFF | Red(R) |
| OFF | ON | Blue(B) |
| ON | OFF | Green(G) |
| ON | ON | -- |

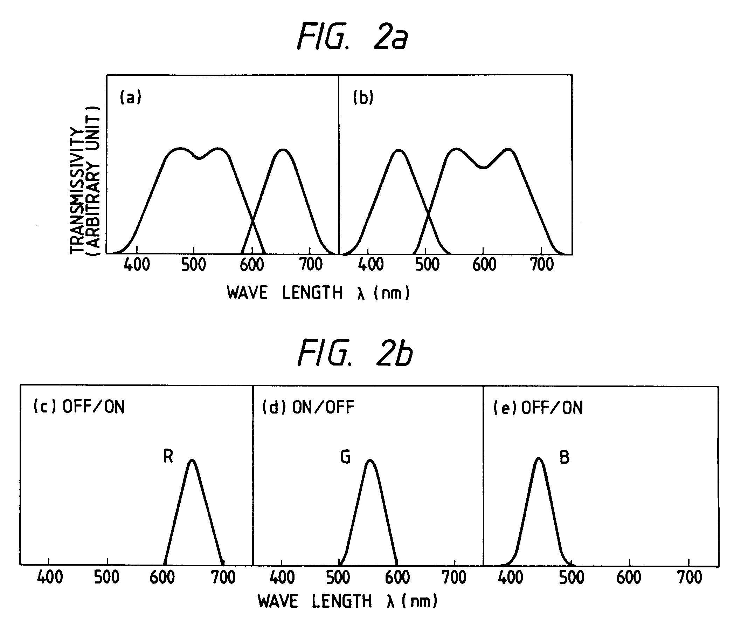

Fig.2a(a) and Fig.2a(b) diagrammatically show spectra of transmission light passing through two different color polarizers, and Fig.2b(c) to Fig.2b(e) diagrammatically show spectra of transmission light obtained when the liquid crystal cells 2A and 2B are operated. Further, as to a combination of regarding the selection of hues by means of color polarizers 3A, 3B and 3C, the modulation function by the second liquid crystal cell 2A, and the selection function of the third liquid crystal cell 2B, there may be contemplated other combinations to the same effect as above, thereby it is to be understood that the present invention is not limited to the above-mentioned examples of the combination.

When the first liquid crystal cell 1 is driven in synchronization with the second and the third liquid crystal cells 2A and 2B, frames of pictures in red, green and blue are capable of sequentially being displayed. A display period of time for displaying one-frame of picture in TVs, and video tape recorders is set taking account of response time necessary for human visual nerves, and normally at 30 ms per frame, human eyes can see it in motion. That is, by displaying frames of pictures in red, green and blue at intervals of about 30 ms, a full color or multi-color display can be realized. This consequently enables providing picture elements for display three times as many compared to a conventional type display where color filters of red, green and blue are disposed in matrices corresponding to active drive elements. Conversely, when assuming to provide the same number of picture elements for a display device, it is only necessary to form one third of the active drive elements previously needed, thereby this method is more advantageous in terms of manufacturing processes as it results in a reduced cost of manufacture, and an improvement in yield.

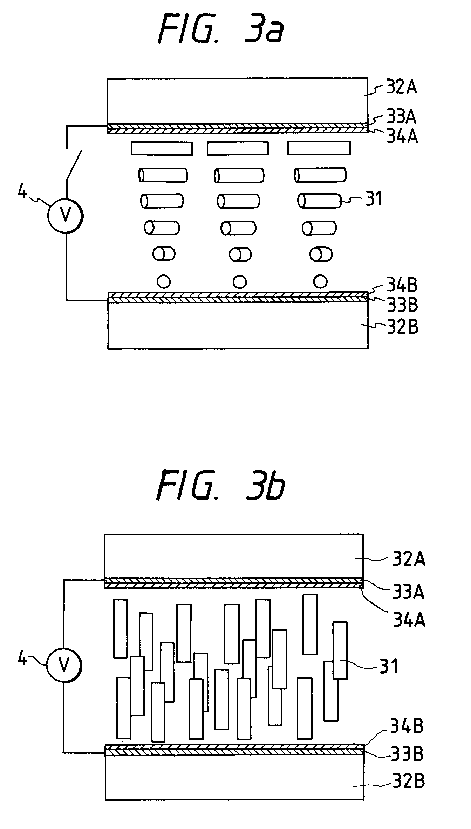

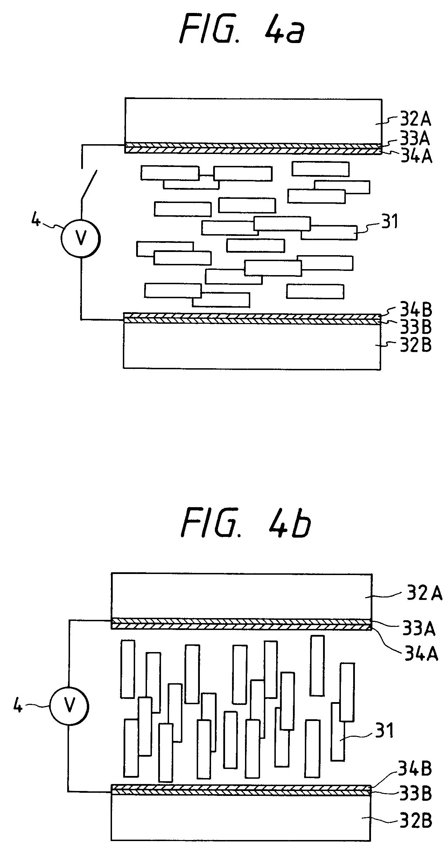

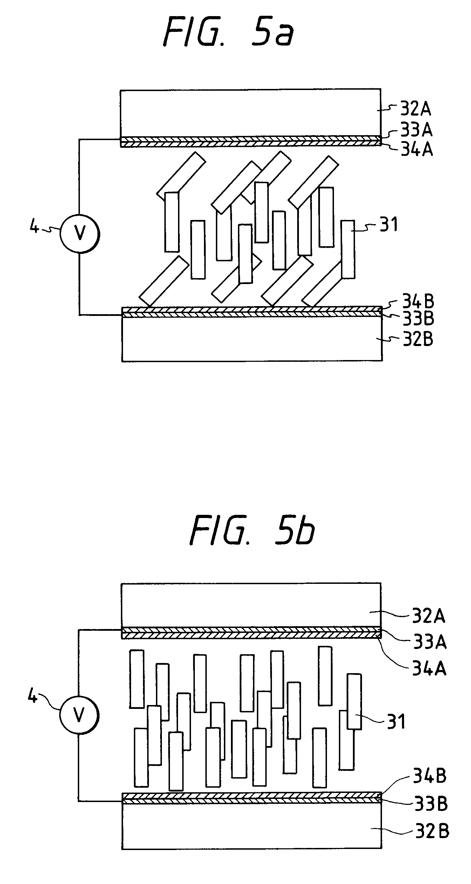

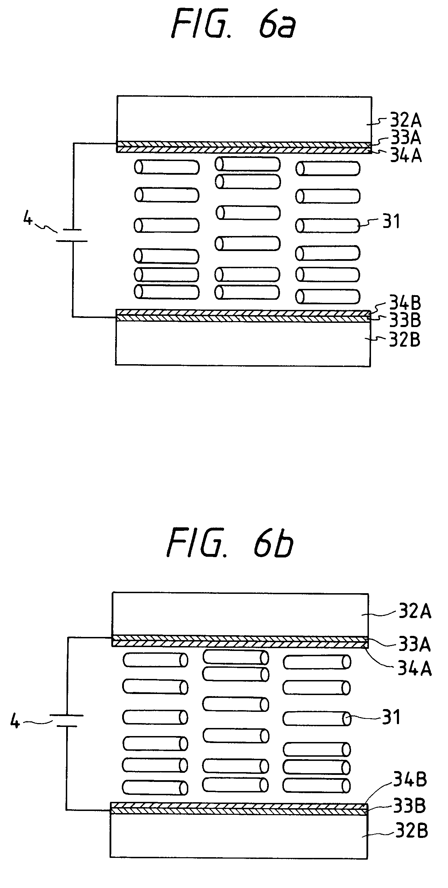

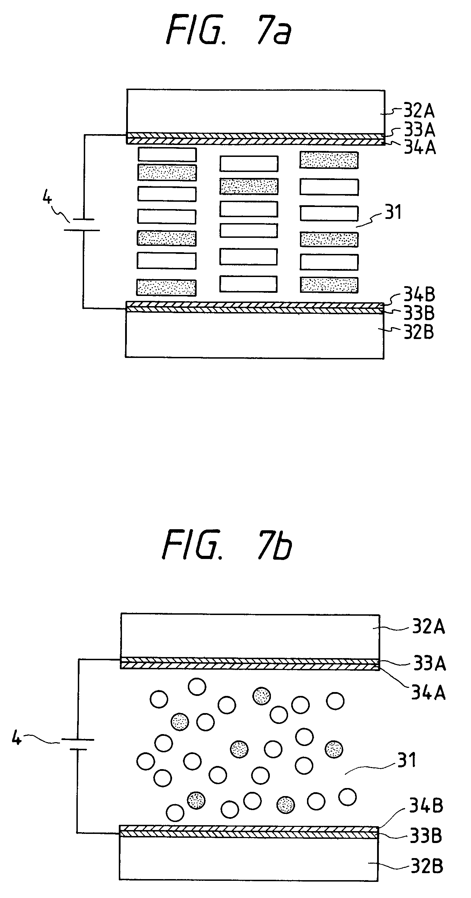

In order to display a frame of picture in the three primary colors at an interval of 30 ms, it is necessary to drive the three liquid crystal 1, 2A, and 2B in a response time of several ms and to apply signals to the whole display area of the first cell within one ms. As to the application time of signals, TFT cells as an active-matrix cell can meet the requirement. TN liquid crystal cells or STN liquid crystal cells now in practical use, however, cannot meet the response time required for implementing the present invention. Thereby, as the first method to eliminate this problem, it is proposed, when using the same TN display element as above, to make its twist angle relatively smaller (for example, about 60°), and also to make the thickness of a liquid crystal cell (i.e., the thickness of a liquid crystal layer) extremely thinner than the previous, for example, to be 3 µm which is about a half of the ordinary cell thickness. Fig.3 shows a schematic diagrammatical constitution of the same. Since the response time of liquid crystal cells is proportional to square of a cell's thickness d, the response time for the above is reduced to about one fourth, which is very advantageous for implementing the invention. As the second method, it is proposed to utilize a nematic liquid crystal which has an untwisted structure in its molecular orientation, and to make product of refractive index anisotropy Δn of the liquid crystal and the cell's thickness d, i.e., Δn x d to become 0.28 µm (Fig.4). If Δn of a liquid crystal to be utilized is given by 0.1, d becomes 2.8 µm, which meets the requirements for the response time of the invention. The third method attempts to realize fast response while utilizing a nematic liquid crystal having the same orientation as the second method, and with a cell thickness comparable to those of the prior art cells. In this method, different predetermined voltages are separately applied to provide either ON or OFF-states (see Fig.5). As have been described in J. Appl. Phys., (65), 527 (1989) or SID 83 Digest pp.30-31 (1983), it is well known that switching between two states when both of which are applied high voltages is more easily accomplished at an excessively high speed. Two reasons are presumed to be the cause: one is due to that molecular orientations between the two states to be switched become close, the other is due to that the substantial thickness of a liquid crystal layer which contributes to determining the response time becomes very thin. Further, as the fourth and fifth methods to this effect, methods by utilizing ferroelectric liquid crystals have been contemplated. For example, as have been described in Jpn. J. Appl. Phys., (24), pp.1389-1393 (1985), and Proc. 6th Int. Display Res. Conf. (Japan Display '86) pp.472-474 (1986), ferroelectric liquid crystals respond in less than 1 ms, thus they are most suitable to be used as the elements for the invention, in particular, as the second and the third liquid crystal elements. As their applications, a display mode making use of birefringence (the fourth method, see Fig.6), or a guest-host mode utilizing a dichroic dye dispersion (the fifth method, see Fig.7) have been conceived. Further, as the sixth method, an antiferroelectric liquid crystal may be employed.

The above-mentioned elements operating in the modes of the first through the six methods, except for the guest-host cell of the fifth method, may be provided with a so-called phase plate which causes the polarization states of transmission light to be changed. This is done to obtain a maximum contrast at an electrical field available in practice, because an electric field strength at which transmissivity becomes minimum can be shifted by incorporating the phase plate, as against a case, for example, of the second method where a very high voltage must be applied across the element to obtain a sufficient contrast for a display. Further, in the case of a ferroelectric liquid crystal cell corresponding to the above fourth method, the thickness of a cell can be controlled within a structure of ordinary ones.

When applying any one of the liquid crystals according to the above six methods, there needs some modification in constitution depending on which liquid crystal cell of the first, the second or the third it should be applied to. As has been explained relating to the principle of operation, it may be said that the first and the second liquid crystals have almost the same function. That is, they select by switching whether to rotate or not rotate the direction of polarization of an incident light by π/2. A difference between the above two liquid crystal cells lies simply in whether drive elements associated with picture elements of the display are formed in a matrix or not. Rotating the direction of polarization by π/2 can be attained through the use of the twisted structure, birefringence, or through a combined action of both. It is indispensable for the third liquid crystal cell, however, to have a function to select one from the two polarization states. Thereby, when such an cell the function of which is based on the twisted structure or birefringence is applied as the third liquid crystal, a polarizer is necessary to be attached in its implementation. On the other hand, in the case of the fifth method, as in this mode of operation, light is selectively absorbed with respect to the directions of polarization, no polarizer is required. Conversely, when this element is used as the second liquid crystal cell, it is necessary to provide a phase plate (λ/4 plate) at the emission side to obtain a nearly circular polarization of light.

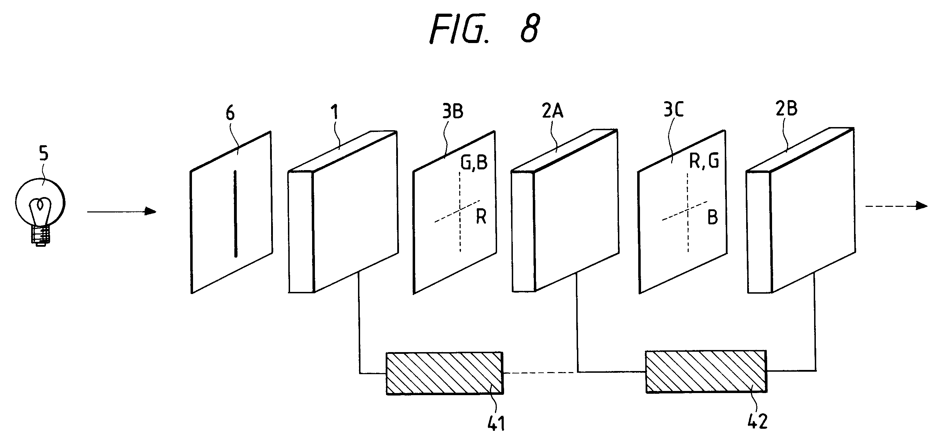

Fig.8 shows the second basic constitution of the invention. The first color polarizer 3A in the first basic constitution is replaced by linear polarizer 6. In this constitution, a display image at active-matrix liquid crystal cell 1 is reversed in contrast of bright and dark, associated with green (G) and blue (B), and red(R), with respect to ON and OFF-states in comparison with those in the first basic constitution. Thereby, image signals from controller unit 41 must take into account the above reversion.

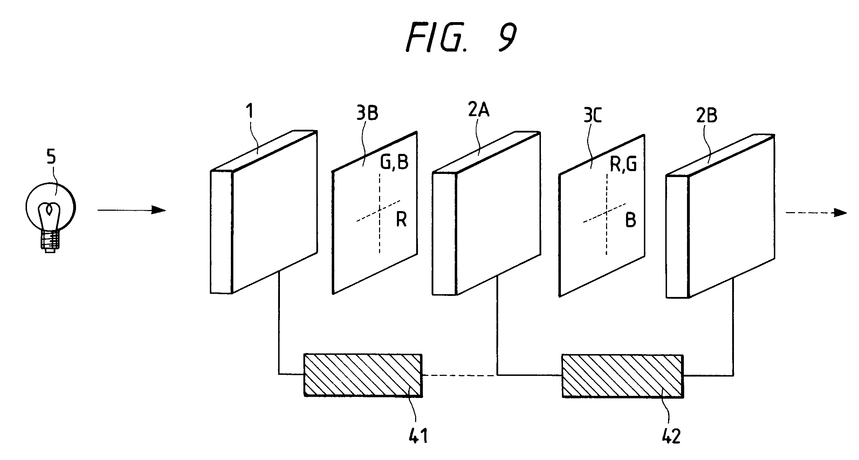

Fig.9 shows the third basic constitution of another embodiment of the invention. In the case when the first liquid crystal cell 1 for image forming is a type which changes transmissivity of light itself (intensity modulation method) other than the incident light polarization state modulation method which has been described hereinabove, color display is capable of being realized by such an arrangement as shown in Fig.9. As preferable liquid crystal cells suitable for the intensity modulation method, there are, for example, polymer dispersed liquid crystals (PDLC). In an off-state where no electric field is applied, light is dispersed due to mismatching between refractive indexes of the liquid crystals and polymer matrices, whereas in an on-state, matching between them is attained thus inducing a transparent state therein. Dichroic dye mixtures may be added into nematic liquid crystals to induce an enhanced contrast. In this mode of display, nematic liquid crystal cells are partitioned in the polymer matrix in micron meter order, which enables obtaining a response speed of ms order suitable for realizing a preferred mode of display according to the invention. The functions assigned to two color polarizers, 3B and 3C, and those assigned to the second and the third liquid crystal elements 2A and 2B are the same with those assigned to in the foregoing first basic constitution.

As hereinabove explained, by adopting this constitution of the invention, a color display is capable of being realized without the need of forming color filters in matrices corresponding to active matrix drive elements on the substrate. Furthermore, its display capacity can be enhanced threefold in principle as compared with prior arts, thus a high resolution display is capable of being realized.

Detailed explanations of the preferred embodiments of the invention will be set forth in the following.

Combinations of the liquid crystal elements according to the invention which have been verified of their operation are listed in Table 2.

**Table 2**

| No. | Basic Constitution | First LC | Second LC | Third LC |
|---|---|---|---|---|
| 1 | First | TN(#1) | TN(#1) | TN(#1) |
| 2 | | TN(#1) | ECB(#2) | ECB(#2) |
| 3 | | TN(#1) | New ECB(#3) | New ECB(#3) |
| 4 | | TN(#1) | FLCB(#4) | FLCB(#4) |
| 5 | | TN(#1) | FLCB(#4) | FLCG(#5) |
| 6-10 | First | New ECB(#3) | Same with No.1-5 | |
| 11-15 | Second | TN(#1) | Same with No.1-5 | |
| 16-20 | Third | PDLC | Same with No.1-5 | |

The display characteristics of the foregoing 20 combinations have been measured. However, it should be understood that the combinations according to the invention are not limited thereto, and that only typical examples of preferred embodiments of the invention were tested. In the following, more specific arrangements of the elements will be described, followed by a description on their display performance.

### (The First Liquid Crystal Cell)

Three different types of cells were fabricated for use as the first image forming liquid crystal cells. TFT substrates for use in 5-in. diagonal portable liquid crystal TVs were used. That is, amorphous silicon transistors (hereinafter referred to as a-Si TFTs) were formed on a glass substrate as an active drive substrate in such a manner that upon completion of forming gate electrodes on a polished quartz glass substrate, an insulation layer (silicon nitride) and an a-Si layer were formed by the plasma CVD, then picture element electrodes (ITO electrodes), and finally source-drain electrodes were formed to complete the a-Si TFT. As an opposing substrate, a glass substrate having ITO electrodes formed over the whole display area thereof was utilized. Normally in a color display, three primary color (RGB) filters are consecutively arranged corresponding to each opposing TFT. However, in this arrangement of the invention, there is no need for disposing such filters as mentioned above, thereby enabling a filter-free constitution for the display.

In the cases of TN cells and new ECB cells, in order to align liquid crystals into appropriate orientation on both substrates, after polyimide films were spin coated and baked, rubbing of the surfaces was uniformly carried out by rotating a roll attached with a buff cloth. In the case of TN elements, two substrates were combined such that their rubbed directions were crossed at 60°, and in the case of the new ECB elements, they were combined so as to be antiparallel. Glass fibers with a 3 µm diameter for the former case, and glass fibers with a 6 µm diameter for the latter case were ground in a mortar, respectively, and appropriate amounts of them were mixed in a sealant to be used as a spacer. As the nematic liquid crystals, Merck Co. make ZLI-4179 hermetically sealed was used for the first liquid crystal cells.

For the case of PDLC cells, nematic liquid crystals of BDH Co. make E7 were mixed with a polyvinyl alcohol (about 500 degrees of polymerization) 10% water solution, and they were homogeneously mixed by rotation in a homogeneous mixer into emulsion which was taken out in a syringe onto the TFT substrates where it was applied thinly with a squeeger, then interposed between two opposing substrates to produce liquid crystal cells.

### (The Second and Third Liquid Crystal Cells)

Five different kinds of liquid crystal cells were fabricated as the second and the third liquid crystal cells. In any of these cells, two glass substrates the whole display area of which was covered by ITO electrodes were utilized. The TN cell and the new ECB cell were arranged to have completely the same structure as the first liquid crystal cell except for the substrate. As the ECB cell, Merck Co. make MLC-1341 was used, the refractive index anisotropy of which was smaller than that of the liquid crystals used in the first liquid crystal cell. For its spacer, glass fiber with a 3 µm diameter was used. For FLCB and FLCG cells for use as ferroelectric liquid crystals, the Chisso Petro Chemical KK make CS-1026 was utilized for the former, while for the latter, a ferroelectric liquid crystal having the following composition was utilized mixed with about a 3 total weight percent of a dichroic pigment including appropriate amounts of Mitsubishi Kasei KK make LSY-116, LSR-401 and LSB-335. As spacer, silica beads of a 1.8 µm diameter were used in the former, and glass fibers of 6 µm diameter were used in the latter case.

A chromaticity diagram showed that each display performance of liquid crystal display devices having structures of No.1 through No.20 had a preferred color display capable of being realized by adopting the constitution of the invention.

## Claims

1. A color display device comprising a white light source (5), a first color polarizer (3A), an active matrix liquid crystal cell (1), a second color polarizer (3B), a second liquid crystal cell (2A), a third color polarizer (3C), and a third liquid crystal cell (2B), disposed consecutively, wherein said first, second, and third color polarizers (3A, 3B, 3C) have a function to change, in response to a polarizing direction of an incident light, the spectra of the light passing therethrough, wherein active matrix elements in said active matrix liquid crystal cell (1) generates a drive signal corresponding to information to be displayed, said second liquid crystal cell (2A) changes the state of polarization of light passing therethrough, and has a drive system (41) for controlling an amount of said variation in polarization, said third liquid crystal cell (2B) switches the directions of polarization of the light transmitting therethrough and has a drive system (42) for controlling said switching, and wherein said first, second and third liquid crystal cells (3A, 3B, 3C) are driven synchronizing one another so as to sequentially display images corresponding to the three primary colors of light.

2. A color display as set forth in claim 1, wherein said active matrix liquid crystal cell (1) comprises a thin film transistor and a transparent electrode as a unit component of a picture element.

3. A color display as set forth in claim 1, wherein said second liquid crystal cell (2A) rotates the direction of polarization of an incident light by π/2 when no electric field is applied, and transmits the light without causing any substantial change when an electrical field is applied.

4. A color display as set forth in claim 1, wherein at least one of said active matrix liquid crystal cell (1) and said second liquid crystal cell (2A) comprises a sandwich structure of nematic liquid crystal which has a twisted structure of molecules as its initial state of orientation.

5. A color display as set forth in claim 1, wherein the color display comprises a means for applying electrical fields such that retardation of light passing through said active matrix-addressed liquid crystal cell is varied approximately between π and 0.

6. A color display as set forth in claim 1, wherein at least one of said active matrix liquid crystal cell (1) and said second liquid crystal cell (2A) comprises a sandwich structure of ferroelectric liquid crystal, wherein the retardation of light passing through said one of elements is imparted approximately π, and wherein an optical molecular tilt angle in said ferroelectric liquid crystal is approximately π/8.

7. A color display as set forth in claim 1, wherein at least one of said active matrix-addressed liquid crystal cell (1), said second liquid crystal cell (2A) and the third liquid crystal cell (2B) comprises a sandwich structure of ferroelectric liquid crystal which contains dichroic dye, and wherein an optical molecular tilt angle in said ferroelectric liquid crystal is approximately π/4.

8. A color display as set forth in claim 1, wherein said third liquid crystal element (2B) comprises a sandwich structure of nematic liquid crystal which has a twisted structure as its initial state of orientation, and a polarizer disposed at a side from which light is emitted.

9. A color display as set forth in claim 1, wherein said third liquid crystal cell (2B) comprises a sandwich structure of nematic liquid crystal which has no twisted structure as its initial state of orientation, a phase shifter, whereat an electric field is applied so as to change the retardation of the light passing therethrough in a range approximately between π and 0, and a polarizer disposed at the light emission side.

10. A color display as set forth in claim 1, wherein said third liquid crystal cell (2B) comprises a sandwich structure of ferroelectric liquid crystal, and wherein retardation of light passing through said element is approximately π, an optical molecular tilt angle in said ferroelectric liquid crystal is approximately π/8, and a polarizer is disposed at a light emission side.

11. A color display as set forth in claim 1, wherein at least one of said first, second, and third color polarizers (3A, 3B, 3C) comprises a color polarizer made up of a plurality of color polarizers in combination, each of which permits light passing therethrough to have a different spectrum.

12. A color display as set forth in claim 1, wherein a select time for selecting one frame of image is less than 10 ms.

13. A color display for sequentially displaying respective images corresponding to the three primary colors of light comprising a white light source, an image forming element, and two optical switches, wherein said image forming element is provided with electrooptical material which changes its optical property responding to applied electrical fields, and a means for applying electrical signals to said electrooptical material corresponding to image information, both formed thereon, wherein said two optical switches have a function to selectively transmit the three primary colors of light therethrough based on a particular combination of ON and OFF thereof, and are operated in synchronization with said image forming element to sequentially display respective images corresponding to the three primary colors of light.

14. A color display for sequentially displaying respective images corresponding to the three primary colors of light, comprising a white light source, a polarizer, an active matrix liquid crystal cell (1), a first color polarizer (3A), a second liquid crystal cell (2A), a second color polarizer (3B), and a third liquid crystal cell (2B), consecutively disposed in the order thereabove, wherein said first, second, and third color polarizers (3A, 3B, 3C) have a function, responding to a polarization direction of each incident light, to change the spectra (hues) of the light being transmitted therethrough, wherein said active matrix liquid crystal cell (1) is provided with a control system (41) which generates a drive signal applied to the liquid crystal corresponding to display information on a display, wherein said second liquid crystal cell (2A) has a function to change the state of polarization of light having passed through said second color polarizer (3B), wherein said third liquid crystal cell (3C) has a switching function to switch polarization directions of the light passing therethrough, and wherein said first, second, and third liquid crystal cells (1, 2A, 2B) are operated synchronizing so as to sequentially display respective images corresponding to the three primary colors of light.

15. A color display as set forth in claim 14, wherein the first liquid crystal cell (1) of an active matrix type comprises a liquid crystal as set forth in claims 4 through 6.

16. A color display for sequentially displaying respective images corresponding to the three primary colors of light, comprising an active matrix liquid crystal cell (1), a first color polarizer (3A), a second liquid crystal cell (2A), a second color polariser (3B), and a third liquid crystal cell (3C), each sequentially disposed in the order hereinabove, wherein said first, second, and third color polarizers (3A, 3B, 3C) change spectra (hues) of an incident light which passes therethrough responding to respective polarization directions, wherein said active matrix liquid crystal cell (1) is provided with a control system (41) which generates a drive signal to be applied to the liquid crystal cell corresponding to display information to be displayed, wherein said second liquid crystal cell (2A) switches the polarization states of light having passed through said second color polarizer (3B) and emits it in a switched polarization state, wherein said third liquid crystal cell (2B) has a function to switch the polarization directions of light passing therethrough and a drive system (41) to control said switching function, and wherein said first, second, and third liquid crystal cells (1, 2A, 2B) are operated in synchronization so as to sequentially display images corresponding to the three primary colors of light.

17. A color display according to claim 16, wherein the active matrix liquid crystal cell (1) has a function to change transmissivity of light in response to an electric field applied.

18. A color display according to claim 17 wherein the active matrix liquid crystal cell (1) comprises nematic liquid crystal dispersed in a polymer matrix.
